# EUROPÄISCHE PATENTANMELDUNG

(11) **EP 2 662 152 A1**
(43) Veröffentlichungstag der Anmeldung: **13.11.2013**
(21) Anmeldenummer: 13166821.2
(22) Anmeldetag: 07.05.2013
(51) Int. Cl.: B05D 7/24, B01J 23/04, B01J 37/02, C04B 41/81, C03C 10/00, C03C 17/00

(54) **Mit einer thermokatalytischen Beschichtung versehene Kaminsichtscheibe sowie Verfahren zu deren Herstellung**

(30) Priorität: 09.05.2012 DE 102012104047
(71) Anmelder: Schott AG, 55122 Mainz (DE)
(72) Erfinder: Henn, Christian, 55546 Frei-Laubersheim (DE); Bockmeyer, Matthias, 55116 Mainz (DE); Hoffmann, Ulf, 64319 Pfungstadt (DE); Herrmann, Jochen, 55128 Mainz (DE)
(74) Vertreter: Blumbach Zinngrebe

(57) **Zusammenfassung**

Die Erfindung betrifft ein Verfahren zur Herstellung einer Kaminsichtscheibe mit thermokatalytischen Eigenschaften, wobei eine magnesiumhaltige Beschichtung auf ein Glaskeramiksubstrat aufgebracht wird.

## Beschreibung

### Gebiet der Erfindung

Die Erfindung betrifft eine mit einer thermokatalytischen Beschichtung versehene Kaminsichtscheibe sowie ein Verfahren zu deren Herstellung. Insbesondere betrifft die Erfindung eine Kaminsichtscheibe für einen Kaminofen zum Verbrennen von Festbrennstoffen wie Holz oder Briketts.

### Hintergrund der Erfindung

Kaminsichtscheiben, die im unmittelbaren Kontakt mit dem Brennraum eines Kamins bzw. Ofens stehen, neigen zum Verrußen. In der Regel bestehen derartige Scheiben aus einer Glaskeramik.

Bekannt sind ferner transparente Glaskeramiken mit einem Easy-to-Clean-Effekt. Dabei ist die Glaskeramik-Platte mit einer geeignet modifizierten bzw. beschichteten Oberfläche mit verminderter Verrußungsneigung bzw. verbesserter Reinigbarkeit versehen.

Problematisch ist insbesondere bei temperaturbeanspruchten transparenten Glaskeramiksubstraten mit Verwendung als Sichtscheibe, dass eine Beschichtung die Glaskeramik unter Spannung, im Besonderen unter eine Zugspannung setzt, die die Festigkeit erheblich reduziert. Eine derartige Sichtscheibe erfüllt dann nicht mehr die geforderten sicherheitstechnisch relevanten Produkteigenschaften.

Das Dokument DE 10 2008 039 684 A1 zeigt eine Glaskeramik, die eine Beschichtung mit einer Lithiumverbindung zur Erzielung einer katalytischen Wirkung aufweist. Nachteilig ist, dass die Onset-Temperatur, also die Temperatur, bei welcher eine thermokatalytische Wirkung einsetzt, bei über 350 °C beginnt. Derart hohe Temperaturen werden aber oft nicht erreicht.

### Aufgabe der Erfindung

Der Erfindung liegt demgegenüber die Aufgabe zugrunde, eine Kaminsichtscheibe bereit zu stellen, die bereits bei Temperaturen unter 350 °C eine thermokatalytische Wirkung aufweist und bei welcher die Festigkeit nicht derart herabgesetzt ist, dass diese kaum noch gebrauchstauglich ist.

### Zusammenfassung der Erfindung

Die Aufgabe der Erfindung wird bereits durch ein Verfahren zur Herstellung einer thermokatalytisch aktiven Kaminsichtscheibe sowie durch eine thermokatalytisch aktive Kaminsichtscheibe nach einem der unabhängigen Ansprüche gelöst.

Bevorzugte Ausführungsformen und Weiterbildungen der Erfindung sind Gegenstand der jeweiligen Unteransprüche. Gemäß der Erfindung wird ein Glaskeramiksubstrat bereit gestellt und eine überwiegend anorganische Beschichtung aufgebracht, welche mehr als 20 mol % Magnesiumionen, bezogen auf die weiteren Kationen des Materials der Beschichtung, aufweist.

Die in der Beschichtung vorhandenen Metall- und Halbmetallionen sind somit zu mindestens 20% Magnesiumionen.

Die Erfinder haben herausgefunden, dass sich über eine derartige Beschichtung sowohl thermokatalytisch aktive Beschichtungen erzeugen lassen, die bereits bei deutlich unter 350 °C wirksam sind, als auch eine Scheibe bereitgestellt werden kann, die trotz der Beschichtung eine hinreichende mechanische Festigkeit aufweist.

So konnte eine Verminderung der Verrußung bzw. thermokatalytischer Abbau der Verrußung bei einer Onset-Temperatur kleiner 350 °C, bevorzugt kleiner 325 °C, besonders bevorzugt kleiner 300 °C erreicht werden.

Besonders gegenüber einer Verschmutzung gegenüber Verbrennungsprodukten von Baumharzen (Kolophonium) ist die erfindungsgemäße Beschichtung wirksam. Die Reinigungswirkung ist auch noch nach einer Dauerbelastung bei 650 °C mit mindestens 80 % der Ausgangsperformance vorhanden.

Dies wird unter anderem durch eine Wechselwirkung des verwendeten Beschichtungsmaterials, nämlich einer Lithium-Aluminium-Silikat (LAS) Glaskeramik mit dem verwendeten Beschichtungsmaterial erreicht.

Weiterhin wird die Stoßfestigkeit und/oder Biegefestigkeit der Glaskeramik auf höchstens 30 %, bevorzugt höchstens 50 %, besonders bevorzugt 70 %, der Ausgangsfestigkeit erniedrigt.

Die Stoßfestigkeit wird mit der dem Fachmann bekannten Methode des Federhammertestes und Kugelfalltestes bestimmt, die Biegefestigkeit mit der Doppelringmethode.

Als Prüfmittel für den Federhammertest wird ein Universal-Federhammer vom Typ F22.50 der PTL Dr. Grabenhorst GmbH verwendet. Die Prüfmittel gemäß Nr. 53-021 haben fünf Schlagenergien von 0,2 bis 1 J und es wird die Schlagenergie erhöht, bis es zum Bruch kommt.

Im Federhammertest werden bevorzugt bevorzugt > 1 J erreicht.

Für den Kugelfalltest im Sinne vorliegender Anmeldung wird eine 10 x 10 cm große und 4 mm dicke Glaskeramikscheibe verwendet. Als Prüfmittel wurde eine Stahlkugel mit 36 mm Durchmesser und 200 g Gewicht verwendet. Es wird beim Kugelfalltest die minimale Fallhöhe der Stahlkugel bei 5 % Fraktile erfasst. Darüber hinaus wird ebenfalls die minimale Fallhöhe der Stahlkugel bei 50 % der Glaskeramikscheiben brechen.

Im Kugelfalltest konnte eine Stoßfestigkeit von mehr als 11 cm, bevorzugt 13 cm bei 5 % Fraktile erreicht werden, was bedeutet, dass bei dieser Fallhöhe weniger als 5 % der verwendeten Muster zerbrechen.

Bei einer Fallhöhe von größer 20 cm, bevorzugt 25 cm brechen mehr als 50 % der beschichtenen Glaskeramikscheiben.

Als Prüfmittel wurde insbesondere eine Stahlkugel mit 36 mm Durchmesser und 200 g Gewicht verwendet.

Die Bestimmung der Festigkeit (Biegefestigkeit) gemäß der Doppelringmethode, bei welcher vorzugsweise auch mehr als 70 MPa entsprechend der Weibullstatistik erreicht werden, erfolgt gemäß DIN EN 1288.

Die Biegefestigkeit liegt dabei bevorzugt bei größer 30 MPa bei 5 % Fraktile, bevorzugt bei größer 50 MPa bei 5 % Fraktile, ganz besonders bevorzugt bei größer 70 MPa bei 5 % Fraktile.

Der Mittelwert der Biegefestigkeit nach der Weibullverteilung liegt bei größer 50 MPa, bevorzugt bei größer 70 MPa, ganz besonders bevorzugt größer 80 MPa.

Neben der überraschend hohen mechanischen Festigkeit hat die Kaminsichtscheibe auch eine sehr gute Temperaturabschreckfestigkeit und Temperaturunterschiedsfestigkeit.

Die Temperaturabschreckfestigkeit wird bestimmt, indem eine heiße Scheibe mit kalten Wasser, also Wasser welches Raumtemperatur (20 °C) hat, abgeschreckt wird. Die Temperatur Tₘₐₓ, bis zu welcher keine Wärmespannungsbrüche auftreten, beträgt 700 °C.

Die Temperaturunterschiedsfestigkeit ist dadurch definiert, welchen Temperaturunterschied die Kaminsichtscheibe aushält, wenn der Rand der Scheibe Raumtemperatur hat und eine Zone der Scheibe erhitzt wird. Auch hier beträgt die Tₘₐₓ, bis zu der keine Wärmespannungsbrüche auftreten, 700 °C.

Die Kamminsichtscheibe hat ferner eine hohe Langzeittemperaturbelastbarkeit, ohne dass die aufgebrachten Schichten degradieren.

Insbesondere ist eine Dauerbelastbarkeit von 660 °C über einen Zeitraum von 100 Stunden gegeben.

Die Magnesiumionen sind vorzugsweise in eine zumindest teilweise amorphen Matrix eingebaut. Insbesondere wird ein Beschichtungsmaterial mit einer Matrix, also einem Material in dem die Magnesiumionen eingebaut sind, verwendet, welches im Wesentlichen röntgenamorph ist.

Vorzugsweise wird als Matrixmaterial Zirkonoxid verwendet.

Die erfindungsgemäße Beschichtung besteht insbesondere überwiegend aus Magnesiumoxid und Zirkonoxid.

In einer Ausführungsform ist die erfindungsgemäße Schicht auf eine dreidimensional verformte Kaminvorsatzscheibe aufgebracht.

Die Beschichtung kann zunächst auf ein planes Vorläufersubstrat aufgebracht werden, welches anschließend gebogen wird.

Durch den Biegevorgang verliert die anorganische Beschichtung nicht ihre thermokatalytische Wirkung und zeigt keine Schichtdefekte wie beispielsweise Risse und oder Schichteintrübungen.

Die erfindungsgemäßen beschichteten Kaminsichtscheiben können eine mittlere Transmission im sichtbaren Bereich von bevorzugt > 60 %, besonderes bevorzugt > 80 % aufweisen.

Die Kaminsichtscheibe umfasst vorzugsweise eine Glaskeramik mit einem thermischen Längenausdehnungskoeffizienten α zwischen +/- 0,5 und 3,0 10⁻⁶/K, bevorzugt zwischen 1,0 und 2,5 10⁻⁶/K.

Der bevorzugte Ausdehnungskoeffizient für Kaminsichtschutzscheiben liegt bei ca. 0 ± 0,3 10⁻⁶/K und kann mit Lithium-Aluminium-Silikat (LAS)-Glaskeramiken unter wirtschaftlichen Bedingungen erreicht werden.

Auch ermöglichen diese Glaskeramiksysteme die Bereitstellung von Kaminsichtschutzscheiben mit der erfindungsgemäßen hohen Transmission sowie Festigkeit.

Aufgrund der niedrigen thermischen Ausdehnung bei ihren Anwendungstemperaturen besitzen diese Glaskeramiken eine ausgezeichnete Temperaturunterschiedsfestigkeit und Temperaturwechselbeständigkeit sowie Dimensionskonstanz. Die Kaminsichtscheibe kann, wie es bei einer Weiterbildung der Erfindung vorgesehen ist, teilweise mit einer Dekorschicht versehen sein.

Die Dekorschicht besteht dabei bevorzugt aus einer glasflussbasierten und/oder Sol-Gel-basierten und/oder Silikon-basierten, pigmentierten, lateral strukturierten Schicht.

Die dekorierten Bereiche der Kaminsichtschutzscheibe bedecken vorzugsweise weniger als 50 %, besonders bevorzugt weniger als 20 %, ganz besonders bevorzugt weniger als 5 % der Fläche der Kaminsichtschutzscheibe ab.

In einer speziellen Ausführungsform stellt der dekorierte Bereich ein Logo oder Typenschild dar.

Bevorzugt werden die Dekorschichten über ein Flüssigbeschichtungsverfahren wie Inkjet, Tampondruck, Nassabziehbilder und/oder Siebdruck aufgebracht.

Die Dekorschicht ist vorzugsweise anorganisch ausgebildet.

Die Dekorschichten können bevorzugt über ein Siebdruckverfahren lateral strukturiert aufgebracht sein. Derartige Schichten bestehen aus einem Glasflussmaterial mit anorganischen Pigmenten, welches einen möglichst niedrigen thermischen Ausdehnungskoeffizienten haben sollte.

In einer bevorzugten Ausführungsform ist die Dekorschicht auf der thermokatalytisch wirkenden Beschichtung aufgebracht. So können Delaminationen der Dekorschicht vermieden werden.

Bevorzugt wird eine LAS (Lithium-Aluminium-Silikat-Glaskeramik: Li₂O-Al₂O₃-SiO₂) mit Hochquarz-Mischkristallen und/der Keatit-Mischkristallen als vorherrschende Kristallphase verwendet.

Bevorzugt werden LAS-Glaskeramiken mit TiO₂ und/oder ZrO₂ und oder SnO₂ als Keimbildner verwendet.

Bei einer Ausführungsform besitzt die transparente LAS-Glaskeramik eine Zusammensetzung in Gew-% auf Oxidbasis von:

| | |
|---|---|
| Li₂O | 3,0-4,5 |
| Na₂O | 0-1,5 |
| K₂O | 0-1,5 |
| ∑Na₂O+K₂O | 0,2-2,0 |
| MgO | 0-2,0 |
| CaO | 0-1,5 - |
| SrO | 0-1,5 |
| BaO | 0-2,5 |
| ZnO | 0-2,5 |
| B₂O₃ | 0-1,0 |
| Al₂O₃ | 19-25 |
| SiO₂ | 55-69 |
| TiO₂ | 1-3 |
| ZrO₂ | 1-2,5 |
| SnO₂ | 0-0,4 |
| ∑SnO₂+TiO₂ | < 3 |
| | |
| | |
| P₂O₅ | 0-3,0 |
| Nd₂O₃ | 0,01-0,4 |
| CoO | 0-0,004 |
| Fe₂O₃ | >0,013-0,025 |
| und/oder | |
| Nd₂O₃ | 0,005-0,4 |

Die verwendeten Substrate enthalten bevorzugt weniger als 1000 ppm, besonders bevorzugt weniger als 500 ppm, ganz besonders bevorzugt weniger als 200 ppm Arsen und/oder Antimon. In einer Ausführungsform ist die verwendete transparente Glaskeramik Arsen- und Antimonfrei.

Der Kristallphasengehalt der Glaskeramikscheiben beträgt bevorzugt 50 - 85 %, besonders bevorzugt 60 - 80 %, ganz besonders 64 - 77 %.

Die bevorzugte Dicke der Glaskeramikscheibe zur Erzielung der notwendigen Festigkeitswerte beträgt 0,8 - 6 mm, bevorzugt 2,5 - 5 mm, besonders bevorzugt 3,5 - 4,5 mm.

In einer bevorzugten Ausführungsform weist die Glaskeramik eine dem Fachmann bekannte glasige Zone an der Grenzfläche zur Luft auf. Die glasige Zone ist durch ein vollständig glasig ausgebildetes Gefüge gekennzeichnet. Die mittlere Dicke der glasigen Zone der Glaskeramik beträgt dabei bevorzugt 100 nm bis 30 µm, besonders bevorzugt 500 nm bis 10 µm.

Die thermokatalytisch aktive Beschichtung kann beidseitig oder einseitig aufgebracht werden.

In einer Ausführungsform ist die thermokatalytisch aktive Beschichtung nur lokal begrenzt und/oder nur lokal strukturiert aufgebracht. Hierfür können sowohl nasschemische als auch Gasphasen-basierte Beschichtungstechnologien verwendet werden.

Als Gasphasen-basierte Beschichtungstechnologien können beispielsweise APCVD, CVD, Sputtern, PICVD, ALD verwendet werden.

Es ist insbesondere denkbar, die magnesiumhaltige Schicht mittels Sputtern, insbesondere mittels Magnetronsputtern aufzubringen.

Dabei kann ein Magnesiumoxidtarget verwendet werden. Bei einer Weiterbildung der Erfindung wird mittels eines Zirkonoxidtargets gleichzeitig Zirkonoxid auf dem Substrat für die Kaminsichtscheibe abgeschieden.

Mittels eines Sputterverfahrens lassen sich sehr dichte Schichten, insbesondere Schichten mit einer geschlossenen Porösität von weniger als 5 % aufbringen.

Bevorzugte Flüssigphasenbeschichtungstechnologien sind Inkjet, Siebdruck, Tauchbeschichtung, Rollenbeschichtung, Sprühbeschichtung, Rakeln oder Fluten.

Im Falle der Materialsynthese über die flüssige Phase können beispielsweise Sol-Gel-Vorstufen und/oder metallresinatbasierte Vorstufen (Lüsterfarben) und/oder Glasfluss-basierte Pasten als Beschichtungsmaterialien verwendet werden.

Vorzugsweise wird die Beschichtung mittels eines Sol-Gel-Verfahrens aufgebracht.

Als Sol-Gel-Vorstufen werden bevorzugt hydrolysierte und kondensierte Alkoholate, beispielsweise des Al, Si, Ti, Zr, Hf oder B verwendet.

Die Beschichtung weist eine Schichtdicke von 20 - 500 nm, bevorzugt 40 - 250 nm, ganz besonders bevorzugt 60 - 150 nm auf.

Die Beschichtung besteht aus einem rein anorganischem, glasigen und oder glaskeramischen und oder keramischen Material, welches zu mehr als 20 mol %, bevorzugt mehr als 35 mol %, ganz besonders bevorzugt mehr als 50 Magnesiumionen bezogen auf die in der Beschichtung vorhandenen Kationen aufweist.

Bevorzugt liegt MgO entweder als amorphes Material oder als nanokristallines Material vor.

Je nach weiteren Bestandteilen der Schichten kann Mg²⁺ direkt in das Netzwerk und/oder Kristallgitter eingebaut sein.

In einer bevorzugten Ausführungsform umfasst die Beschichtung Magnesium als Mg₂Al₂O₄ und/oder MgZrO₃.

Zusatzbestandteile der Beschichtung können aus nichtoxidischem und/oder oxidischem Material bestehen. Nichtoxidische Materialien können insbesondere sein: SiN, MgF₂, MgOF, SiON, SiBN, SiCBN, ZrN, ZrC, SiC, AlN, AlON,

Oxidische Materialen können sein: TiO₂ (Anatas und/oder Rutile), ZrO₂ (amorphe, monokline und/oder tetragonale Phase), Ca dotiertes ZrO₂ oder Y₂O₃ dotiertes ZrO₂, MgO dotiertes ZrO₂, CeO₂, Gd₂O₃ dotiertes CeO₂, SiO₂, B₂O₃ gamma oder alpha Al₂O₃, amorphes Al₂O₃, SnO₂, ZnO, Bi₂O₃, Li₂O, K₂O, SrO, NaO, CaO, BaO, La₂O₃ und/oder HfO₂.

Es können amorphe und/oder teilkristalline Materialien als Zusatzbestandteile neben Mg²⁺ in der Beschichtung vorhanden sein.

In einer Ausführungsform werden nanokristalline Materialien als Zusatzbestandteile verwendet.

Unter amorphen Materialien werden röntgenamorphe Materialien verstanden.

Nanokristalline Materialien haben in der Regel eine Kristallitgröße von 3 - 100 nm, bevorzugt 5 - 50 nm, ganz besonders bevorzugt von 5 - 25 nm.

Teilkristalline Materialien haben einen Kristallphasengehalt von 1 - 99 %, bevorzugt 20 - 80 %. Diese Bestimmung wird mit der dem Fachmann bekannten Methode der Röntgenbeugung durchgeführt. An den Schichten wird dabei die Röntgenbeugung im streifenden Einfall mit einem Einstrahlwinkel von 0,3 bis 0,4 ° 2 Theta durchgeführt.

Bevorzugt ist die Beschichtung transparent und hat eine Brechzahl zwischen 1,65 und 2,5, bevorzugt zwischen 1,7 und 2, 1.

Die Restporosität der thermokatalytisch aktiven Beschichtung liegt bevorzugt bei 20 - 2 %, besonders bevorzugt bei 15 - 5 % Volumenprozent. In einer Ausführungsform weist die Schicht geschlossene Poren auf. Diese Poren haben an der Gesamtporosität bevorzugt einen Anteil von weniger als 95 %, besonders bevorzugt von weniger als 50 %.

Die Beschichtung weist bevorzugt Mesoporen und/oder Mikroporen auf, mit einem Maximum des Porendurchmessers des Porenausgangs von kleiner 10 nm, bevorzugt kleiner 8 nm, ganz bevorzugt kleiner 6 nm.

Die Porosität wird im Sinne der Erfindung mittels ellipsometrischer Porosimetrie mit H₂O als Sorptiv durchgeführt.

Bevorzugt weist die thermokatalytisch aktive Beschichtung einen Kontaktwinkel gegenüber H₂O von kleiner 50 Grad, bevorzugt kleiner 30 Grad auf. Der Kontaktwinkel über Diiodmethan liegt vorzugsweise zwischen 50 - 20 Grad.

Bevorzugt weist die Beschichtung somit eine hohe Oberflächenenergie auf, wobei der polare Anteil bei größer 5 mN/m, bevorzugt größer 7 mN/m und der disperse Anteil größer 36 mN/m, bevorzugt größer 38 mN/m liegt.

Die erfindungsgemäße Kaminsichtscheibe weist trotz der Beschichtung im Mittel im Wellenlängenbereich von 500 - 2000 nm eine mittlere Transmission größer 50 %, bevorzugt größer 65 %, ganz besonders bevorzugt größer 75 % auf.

Weiter weist die Beschichtung keine höhere Kratzerauf- und -anfälligkeit im normalen Gebrauch gegenüber einer nicht beschichteten Glaskeramik auf.

Die Beschichtung weist demnach im dem Fachmann bekannten Bosch Siemens Hausgerätetest bzw. mit einem Sklerometer mit einer SiC Spitze eine Kratzfestigkeit mit einem Spitzendurchmesser von 1 mm eine Kratzfestigkeit > 500 g, bevorzugt > 700 g auf.

### Beispiel 1

Es wird eine Beschichtungslösung wie folgt hergestellt:

Zu 0,15 mol einer Zirkonium-n-propoxidlösung (70 %) wird in einem Rundkolben unter Rühren 0,15 mol Acetylaceton zugetropft, wobei eine deutliche Erwärmung der Reaktionslösung einsetzt. Das entstandene Reaktionsgemisch wird 60 min bei Raumtemperatur gerührt und anschließend mit 0,45 mol Wasser hydrolysiert. Nun wird dem Vorhydrolysat 0,15 mol Magnesiumacetat zugesetzt und unter Rühren darin gelöst. Durch Zugabe von Ethanol wird eine 6 mass.-% Beschichtungslösung erhalten.

Im Tauchbeschichtungsverfahren wird auf ein gereinigtes transparentes LAS-Glaskeramiksubstrat mit einer Ziehgeschwindigkeit von 60 cm/min ein transparenter gutbenetzender Nassfilm aufgebracht. Durch einen nachgeschalteten Temperungsprozess (450 °C, 1 h) entsteht eine erfindungsgemäße, transparente, abriebfeste und temperaturstabile thermokatalytisch aktive Beschichtung, welche rissfrei ausgebildet ist.

### Beispiel 2

Zu 0,3 mol Aluminium-tri-sec-butanolat wird in einem Rundkolben unter starkem Rühren 0,3 mol Triethanolamin zugetropft, wobei eine deutliche Erwärmung der Reaktionslösung einsetzt. Das entstandene Reaktionsgemisch wird 60 min bei Raumtemperatur gerührt und anschließend mit 0,9 mol Wasser hydrolysiert. Dem Vorhydrolysat wird im nächsten Schritt 0,15 mol Magnesiumacetat zugesetzt und unter Rühren darin gelöst. Durch Zugabe von Ethanol wird eine 6mass.-% Beschichtungslösung erhalten.

Durch einen äquivalenten Beschichtungs- und Temperungsprozess zu Beispiel 1 entsteht eine erfindungsgemäße, transparente, abriebfeste und temperaturstabile thermokatalytisch aktive, rissfreie Beschichtung.

### Beispiel 3

Es wird eine Beschichtungslösung wie folgt hergestellt:

0,0326 mol Zirconiumchlorid werden in 3,09 mol Ethanol gelöst. In 1,11 mol Wasser werden 0,0326 mol Magnesiumacetat gelöst. Anschließend wird die Magnesiumlösung unter Rühren in die Zirconiumlösung gegeben und das Reaktionsgemisch 60 min gerührt.

Eine gereinigte Glaskeramikscheibe wird in einem Tauchprozess mit der Lösung beschichtet. Die Beschichtung erfolgt bei einer Ziehgeschwindigkeit von 40 cm/min. Anschließend wird die Schicht 1h bei 450 °C getrocknet. Das Glas erhält eine abriebfeste, langzeitbeständige, transparente Beschichtung.

Die erfindungsgemäß aufgebrachten Beschichtungen können wie folgt getestet werden:

Zur Beurteilung des thermokatalytischen Rußabbaus wird eine Verschmutzung aus verkoktem Kolophonium auf den Beschichtungen abgeschieden. Hierzu wird eine ehtanolische Kolophoniumlösung auf das Substrat aufgesprüht. Zur Herstellung der Kolophoniumverschmutzung wird aus 15 g Kolophonium und 30 ml Ethanol eine übersättigte Lösung hergestellt. Nach 30 min Rühren wird diese Lösung mit 3 Teilen Ethanol verdünnt. Die so beschichteten Platten werden im Ofen eingebrannt (350 °C, 1 h). Hieraus resultiert eine blickdichte Verrußung der funktionalisierten Glaskeramikscheibe.

Anschließend werden die Proben bei Temperaturen von 300-550°C getempert. Bevorzugt wird im Test mit einer schrittweisen Erhöhung der Temperatur um 50 °C der Bereich von 300-550 °C mit einer Haltezeit von 1 h geprüft. Nach jeder Temperaturbelastung und Abkühlung der Proben werden diese visuell bewertet.

Ein vollständiger Rußabbau tritt auf unbeschichteten LAS-Glaskeramikscheiben bei 550 °C auf. Hierbei handelt es sich um eine pyrolytische Zersetzung der organischen Bestandteile. Alle in den Beispielen aufgeführten Oberflächen zeigen deutlich bessere und frühere Zersetzung der Kolophoniumverschmutzung, welche teileweise bereits ab 300 °C auftreten.

### Beschreibung der Zeichnungen

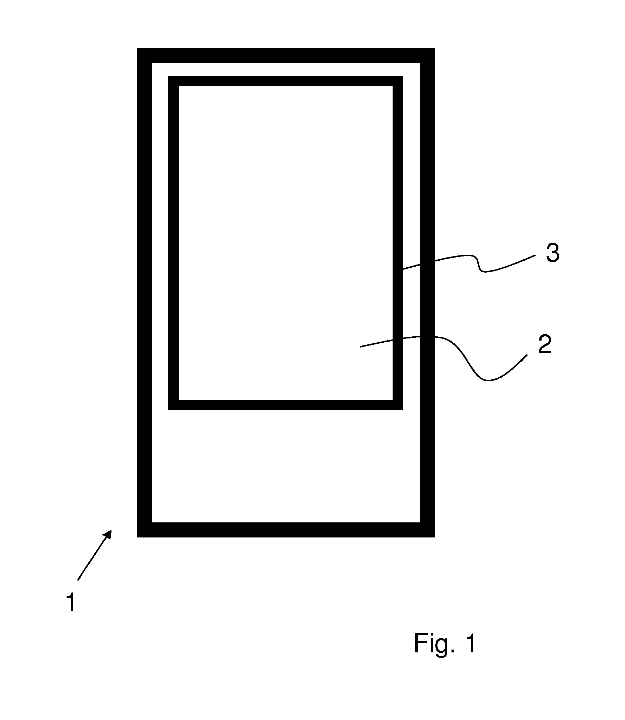

Fig. 1 zeigt, schematisch dargestellt, einen Kaminofen 1 zum Verbrennen von Festbrennstoffen.

Der Kaminofen umfasst eine Kaminsichtscheibe 3 mit einer randseitigen Dekorschicht 3.

Die Kaminsichtscheibe 3 ist mit einer thermokatalytisch aktiven Beschichtung versehen, die insbesondere gemäß einem der folgenden Beispiele hergestellt werden kann.

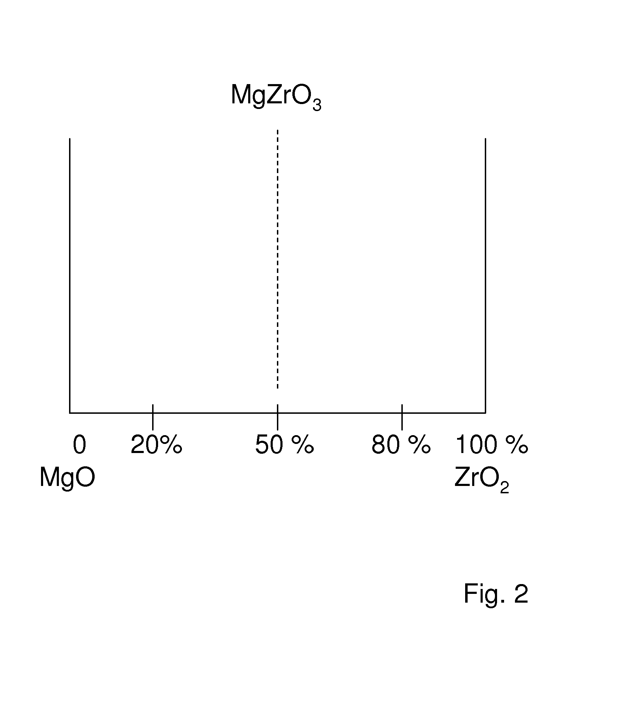

Fig. 2 zeigt ein Phasendiagramm, bei welchem auf der x-Achse das Verhältnis von Magnesiumoxid zu Zirkonoxid in mol-% bezogen auf die Kationen des Beschichtungsmaterials, also bezogen auf das Magnesium und das Zirkon, aufgetragen ist.

Bei 50 % nimmt das Beschichtungsmaterial die Form MgZrO₃ ein.

Die erfindungsgemäße Beschichtung bewegt sich vorzugsweise in einem Bereich von 20 bis 80 % Magnesiumanteil, wohingegen das auch als Matrixmaterial bezeichnete verwendete Zirkonoxid den überwiegenden Anteil des Restmaterials ausmacht. Ein Molverhältnis um 50 % herum erzielt opitmale Ergebnisse.

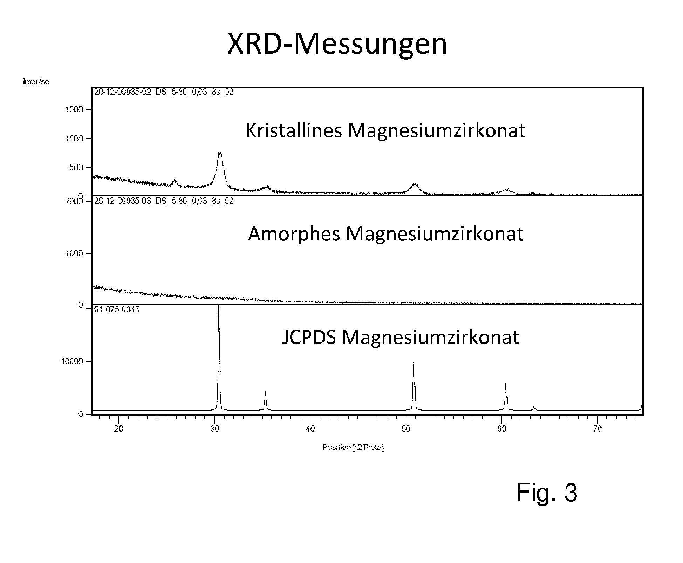

Fig. 3 zeigt Röntgenbeugungsmessungen. Auf der x-Achse ist die Position und auf der y-Achse die Anzahl der Impulse aufgetragen.

Die untere Kurve zeigt den idealen Verlauf eines kristallinen Magnesiumzirkonats gemäß der JCPDS Datenbank.

Auf der oberen Kurve ist ein Magnesiumzirkonat aufgetragen, welches derart stark erhitzt wurde, dass es eine überwiegend kristalline Struktur angenommen hat. Dieses Material hat keine hinreichende thermokatalytische Wirkung mehr.

Die mittlere Kurve zeigt ein amorphes Magnesiumzirkonat im Sinne der Erfindung. Dieses ist röntgenamorph, d.h. es sind keine deutlich sichtbaren Peaks vorhanden.

Ein derartiges Material hat die beabsichtigte thermokatalytische Wirkung. Es hat sich herausgestellt, dass deutlich sichtbarere Peaks dazu führen, dass die thermokatalytische Wirkung verloren geht. Das Material ist mithin nicht mehr röntgenamorph.

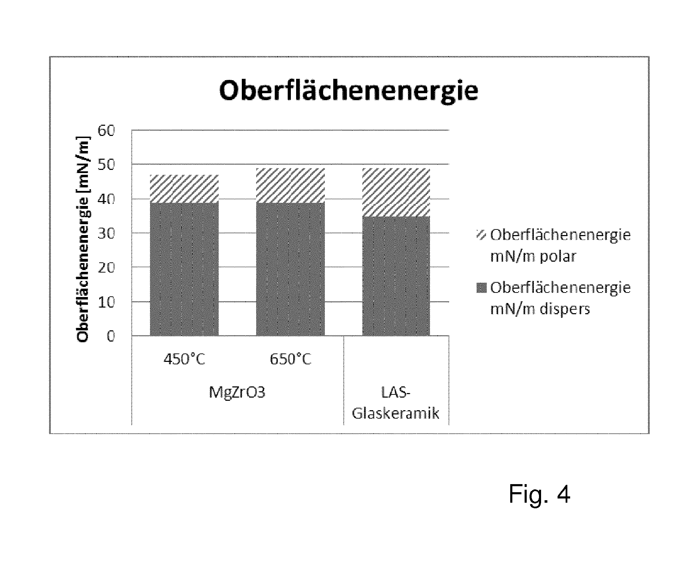

Fig. 4 zeigt die Oberflächenenergien eines Magnesiumzirkonats vergleichen mit einer LAS-Glaskeramik.

Die Oberflächenenergie ist in mN/m auf der y-Achse aufgetragen.

Zu erkennen ist, dass das bei 450°C getemperte Magnesiumzirkonat eine Gesamtoberflächenenergie hat, welche nur wenig niedriger ist als die der unbehandelten LAS-Glaskeramik. Die Oberflächenenergie beträgt über 40 mN/m. Das Aufnehmen der thermokatalytischen Beschichtung geht also nicht mit einer deutlichen Reduzierung der Oberflächenenergie einher, wie dies oft bei anderen Easy-to-Clean-Beschichtungen der Fall ist.

Es hat sich lediglich der disperse Anteil der Oberflächenenergie verschoben.

Das überwiegend kristalline Magnesiumzirkonat hat eine annäherend gleiche Oberflächenenergie, es hat sich lediglich der polare Anteil aufgrund der kristallinen Strukturen etwas erhöht, so dass die Gesamtoberflächenenergie etwa der LAS-Glaskeramik entspricht, welche als unbeschichtetes Ausgangsmaterial verwendet wird.

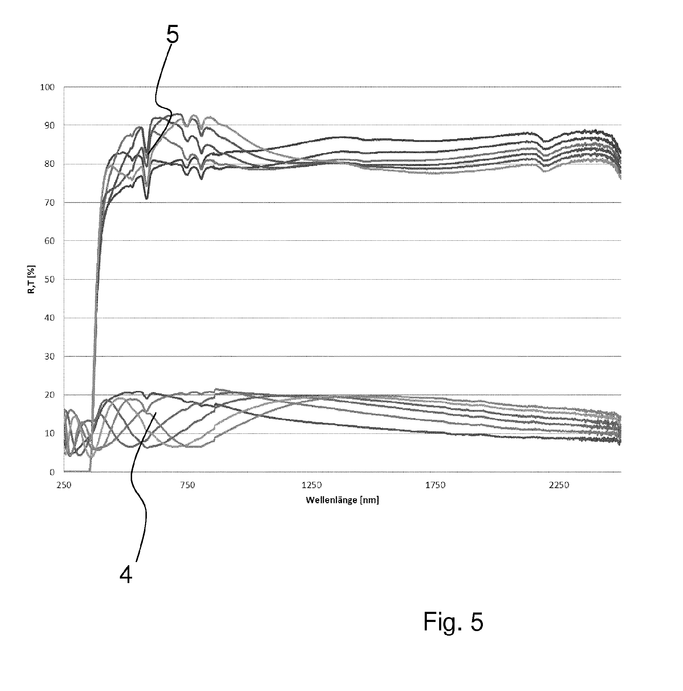

Fig. 5 zeigt Transmissions- und Reflektionsverläufe verschiedener erfindungsgemäßer Verbundmaterialien.

Auf der x-Achse ist die Wellenlänge in Nanometern und auf der y-Achse die Reflektion bzw. Transmission in Prozent wiedergegeben.

Die unteren Kurven 4 zeigen den Reflexionsverlauf und die oberen Kurven 5 den Transmissionsverlauf.

Zu erkennen ist, dass im sichtbaren Wellenlängenbereich die Transmission stets über 70 % liegt und sich nur wenig ändert. Die Minima und Maxima der Reflexionsverläufe hängen mit der Dicke des Schichtmaterials zusammen.

Durch die Erfindung konnte eine Kaminsichtscheibe aus einem Verbundmaterial bereitgestellt werden, welches mechanisch und thermisch hoch beständig ist.

Inbesondere besteht auch eine thermische Dauerbeständigkeit, d.h. die für die thermokatalytische Wirkung verantwortlichen Magnesiumionen diffundieren nicht nach und nach aus dem Schichtmaterial.

Weiter besitzt das Material eine hohe Transparenz.

## Patentansprüche

1. Verfahren zur Herstellung einer thermokatalytisch aktiven Kaminsichtscheibe umfassend die Schritte:
- Bereitstellen eines Lithium-Aluminium-Silikat-Glaskeramiksubstrats,
- Aufbringen einer überwiegend anorganischen Beschichtung welche mehr als 20 mol% Magnesiumionen bezogen auf die im Material der Beschichtung vorhandenen Kationen aufweist.

2. Verfahren zur Herstellung einer thermokatalytisch aktiven Kaminsichtscheibe nach dem vorstehenden Anspruch, **dadurch gekennzeichnet, dass** eine Lithium-Aluminium-Silikat-Glaskeramik mit Hochquarz-Mischkristallen und/oder Keatit-Mischkristallen als vorherrschende Kristallphase verwendet wird.

3. Verfahren zur Herstellung einer thermokatalytisch aktiven Kaminsichtscheibe nach einem der vorstehenden Ansprüche, **dadurch gekennzeichnet, dass** die Beschichtung mittels eines Sol-Gel-Verfahrens aufgebracht wird.

4. Verfahren zur Herstellung einer thermokatalytisch aktiven Kaminsichtscheibe nach dem vorstehenden Anspruch, **dadurch gekennzeichnet, dass** die Magnesiumionen in einer zumindest teilweise amorphen Matrix eingebaut sind.

5. Verfahren zur Herstellung einer thermokatalytisch aktiven Kaminsichtscheibe nach einem der vorstehenden Ansprüche, **dadurch gekennzeichnet, dass** die Magnesiumionen in einer Zirkonoxydmatrix eingebaut werden.

6. Verfahren zur Herstellung einer thermokatalytisch aktiven Kaminsichtscheibe nach einem der vorstehenden Ansprüche, **dadurch gekennzeichnet, dass** ein transparentes LAS-Glaskeramiksubstrat verwendet wird.

7. Verfahren zur Herstellung einer thermokatalytisch aktiven Kaminsichtscheibe nach dem vorstehenden Anspruch, **dadurch gekennzeichnet, dass** einem Sol-Gel-Precursormaterial ein Magnesiumsalz, insbesondere Magnesiumacetat, hinzugegeben wird.

8. Verfahren zur Herstellung einer thermokatalytisch aktiven Kaminsichtscheibe nach einem der vorstehenden Ansprüche, **dadurch gekennzeichnet, dass** eine Beschichtung mit einer Schichtdicke zwischen 20 und 500 nm, bevorzugt zwischen 40 und 250 nm und besonders bevorzugt zwischen 60 und 150 nm aufgebracht wird.

9. Verfahren zur Herstellung einer thermokatalytisch aktiven Kaminsichtscheibe nach einem der vorstehenden Ansprüche, **dadurch gekennzeichnet, dass** die Beschichtung mittels eines Flüssigbeschichtungsverfahrens, insbesondere mittels Siebdruck oder Tauchbeschichtung, aufgebracht wird.

10. Verfahren zur Herstellung einer thermokatalytisch aktiven Kaminsichtscheibe nach dem vorstehenden Anspruch, **dadurch gekennzeichnet, dass** das Glaskeramiksubstrat abschnittsweise mit einer Dekorschicht versehen wird, insbesondere dass die Dekorschicht auf die Beschichtung aufgebracht wird.

11. Verfahren zur Herstellung einer thermokatalytisch aktiven Kaminsichtscheibe nach dem vorstehenden Anspruch, **dadurch gekennzeichnet, dass** die Dekorschicht mittels Siebdruck aufgebracht wird und/oder dass die Beschichtung bei einer Temperatur von über 250 °C eingebrannt wird und/oder dass die Beschichtung mittels eines Sputterverfahrens aufgebracht wird.

12. Kaminsichtscheibe, herstellbar, insbesondere hergestellt mit einem Verfahren nach einem der vorstehenden Ansprüche

13. Kaminsichtscheibe nach dem vorstehenden Anspruch, **dadurch gekennzeichnet, dass** die Onset-Temperatur, bei welcher eine thermokatalytische Wirkung einsetzt bei unter 350 °C, vorzugsweise unter 325°C, besonders bevorzugt unter 300 °C einsetzt.

14. Kaminsichtscheibe nach einem der vorstehenden Ansprüche, **dadurch gekennzeichnet, dass** die Kaminsichtscheibe zumindest abschnittsweise an der Oberfläche eine vollständig glasig ausgebildete Zone aufweist.

15. Kaminsichtscheibe nach einem der vorstehenden Ansprüche, **dadurch gekennzeichnet, dass** die Kaminsichtscheibe in einer Dicke von 4 mm im Kugelfalltest eine Stoßfestigkeit von mehr als 12 cm bei 5 % Fraktile aufweist und/oder dass die Kaminsichtscheibe eine Streuung nach Haze gemäß ASTM D1003 von weniger als 3 %, vorzugsweise von weniger als 2 %, aufweist.
